# EUROPÄISCHE PATENTSCHRIFT

(11) **EP 1 346 904 B1**
(45) Veröffentlichungstag und Bekanntmachung des Hinweises auf die Patenterteilung: **05.04.2006**
(21) Anmeldenummer: 03003882.2
(22) Anmeldetag: 21.02.2003
(51) Int. Cl.: B62D 53/08

(54) **Sattelkupplung**
Fifth wheel coupling
Sellette d'attelage

(30) Priorität: 23.03.2002 DE 10213148
(43) Veröffentlichungstag der Anmeldung: 24.09.2003
(73) Patentinhaber: Jost-Werke GmbH & Co. KG, 60528 Frankfurt am Main (DE)
(72) Erfinder: Gallego, Jose Algüera, 63739 Aschaffenburg (DE); Zhang, Fan, Dr.-Ing., 65479 Raunheim (DE)
(74) Vertreter: Fuchs Mehler Weiss & Fritzsche

(56) Entgegenhaltungen:
- EP-A- 0 052 792
- EP-A- 0 694 467
- EP-A- 1 188 649
- WO-A-01/34454
- DE-A- 19 952 997

## Beschreibung

Die Erfindung betrifft eine Sattelkupplung für die lösbare Verbindung zwischen einem Auflieger und einer Zugmaschine mit einer Kupplungsplatte und einem Paar Lagerböcken zur Befestigung der Sattelkupplung am Rahmen der Zugmaschine, wobei
- die Kupplungsplatte um eine zur Aufstandsfläche der Zugmaschine parallele und sich quer zur Längsachse der Zugmaschine erstreckende Achse schwenkbar mit den Lagerböcken verbunden ist,
- die Kupplungsplatte an der Unterseite ein Paar zur Achse koaxiale, hohlzylindrische Lagermulden aufweist und an den Lagerböcken dazu korrespondierende, zylindrische Lagerflächen ausgebildet sind,
- die Lagerböcke unterhalb der Lagerflächen ein Auge für den Durchgriff eines Befestigungsmittels in Form einer Brücke aufweisen, mit dem die Kupplungsplatte um die Achse schwenkbar mit den Lagerböcken verbunden ist, und wobei
- zwischen der Lagermulde und der Lagerfläche eine Lagerschale sowie zwischen der Brücke und der obeen Innenwandung des Auges ein Dämpfungselement angeordnet ist.

Eine derartige Sattelkupplung ist zum Beispiel aus der DE 1 99 52997 A1 bekannt.

Für die Montage derartiger Sattelkupplungen auf dem Rahmen einer Zugmaschine hat man früher gesonderte Montageplatten verwendet, die an unterschiedliche seitliche Abstände der Längsträger des Zugmaschinenrahmens anpaßbar waren und auf denen die Lagerböcke der Sattelkupplung in einem fest vorgegebenen seitlichen Abstand zueinander befestigt wurden. Seit einiger Zeit verzichtet man auf diese Montageplatten, um Gewicht einzusparen und die Bauhöhe zu verringern. Damit ergab sich die Notwendigkeit, die Sattelkupplungen für unterschiedliche Rahmenbreiten auszulegen. Zwar variieren diese nur in einem engen Bereich, weil zum einen die Außenabmessungen der Auflieger und Zugmaschinen gesetzlich begrenzt sind und weil zum anderen die Reifenbreiten genormt sind, woraus sich zwangsläufig eine Obergrenze für die Rahmenbreite ergibt.

Die Karosseriehersteller haben sich darauf eingestellt und stellen aus wirtschaftlichen Gründen die zwischen den Längsträgern des Rahmens angeordneten Quertraversen praktisch nur noch in einer Länge her. Damit würden sich einheitliche Breiten der Rahmen ergeben, wenn für die Längsträger stets Profile, üblicherweise I-Profile, mit gleichdicken Stegen verwendet wurden. Da man aber aus Preis- und Gewichtsgründen für leichte und schwere Zugmaschinen auf Profile zurückgreift, die zwar die gleiche Form aber unterschiedliche Flansch- und Stegdicken aufweisen, ergeben sich auch unterschiedliche Montagebreiten für die Befestigung der Sattelkupplungen.

Bei diesen handelt es sich um komplizierte und hochbelastete Bauteile, die eine aufwendige Fertigung erfordern und die man wirtschaftlich nur dann herstellen kann, wenn man große Stückzahlen einer einzigen Baugröße herstellt. Damit ergibt sich die Aufgabe, Möglichkeiten aufzuzeigen, wie einheitlich hergestellte Sattelkupplungen an unterschiedlich breite Rahmen angepaßt werden können. Zu diesem Zweck sind aus der DE 199 52 997 A1 verschiedene Möglichkeiten bekannt geworden.

Eine erste Lösung besteht darin, in der Kupplungsplatte zwei Paare von Bohrungen für die Schrauben zur Befestigung der Brücken vorzusehen, womit eine um den axialen Lochabstand gestufte Breitenanpassung möglich ist. Eine Feinanpassung wird eröffnet, wenn die auf dem Rahmen oben aufliegenden Montageflansche der Lagerböcke mit sich quer zu den Längsträgern erstreckenden Längslöchern ausgestattet sind.

Bei einer zweiten Lösung ist vorgesehen, daß die Lagermulden von axial beabstandeten Anlageflächen begrenzt sind. Dabei ist der axiale Abstand größer als die Breite des Lagerbocks. Zur stufenweisen Anpassung an unterschiedliche Rahmenbreiten sollen zwischen den Anlageflächen und dem Lagerbock Distanzstücke eingelegt werden, die auch als einstückig an der Brücke angeformte Nasen ausgebildet sein können. Auch diese Lösung ist mit Langlöchern in horizontalen Montageflanschen kombinierbar.

Bei der erstgenannten Lösung muß eine relativ grobe Abstufung der Montagebreite vorgesehen werden, weil die Bohrungsabstände nicht beliebig klein gewählt werden können, will man die Kupplungsplatte im Bereich der Bohrungen nicht zu sehr schwächen. Das erfordert entsprechend lange Langlöcher und entsprechend breite horizontale Montagellansche der Lagerböcke.

Bei der zweitgenannten Lösung wird als nachteilig angesehen, daß die Montage durch die zusätzlichen Distanzstücke erschwert wird und daß Montagefehler auftreten können, wenn beim Einbau der Distanzstücke fälschlich "innen" und "außen" verwechselt wird oder wenn sie nicht gleichsinnig angeordnet werden. Das gilt auch für den Einbau der Brücken mit einseitig angeformten Nasen.

Ein weiterer Nachteil der bekannten Sattelkupplung besteht darin, daß die Befestigung mittels horizontaler Montageflansche erfolgt. Um die Anordnung der Sattelkupplung auch in Längsrichtung des Rahmens variieren zu können, sind im Rahmen üblicherweise Bohrungsreihen vorgesehen, die länger als die Bohrungsreihen im Montageflansch der Lagerböcke sind, so daß eine gestufte Anpassung der Befestigungsstelle an verschiedene Bedingungen möglich ist. Nun sind aber die oberen und unteren Flansche der I-förmigen Längsträger weitaus höher belastet als der Steg in der Nähe der neutralen Zone und jede Bohrung im oberen Flansch bedeutet demnach eine Schwächung des Profils. Diese kann zwar durch Verwendung eines stärkeren Profils leicht kompensiert werden, hat aber den Nachteil, daß das Profil im ungelochten Bereich überdimensioniert ist.

Damit ergibt sich zusätzlich zum Problem der Breitenanpassung noch der Aspekt, daß der durch den Wegfall einer gesonderten Montageplatte erlangte Vorteil der Gewichtseinsparung nicht durch überdimensionierte Längsträger kompensiert wird oder gar zu einem Gewichtszuwachs führt.

Der Erfindung liegt demnach die Aufgabe zugrunde, bei der Montage der Sattelkupplung auf dem Rahmen einer Zugmaschine die Schwächung der Längsträger zu vermeiden, wenigstens aber zu vermindern und gleichzeitig eine feinstufige, besser noch eine stufenlose Breitenanpassung der Lagerbockpositionen an den Rahmen der Zugmaschine zu ermöglichen.

Diese Aufgabe wird erfindungsgemäß dadurch gelöst, daß
- die Lagerböcke einstückig aus einem Gußteil bestehen und einen vertikalen Montageflansch für die direkte seitliche Befestigung an den Längsträgern des Rahmens der Zugmaschine aufweisen,
- die Brücken auf die hohlzylindrischen Lagermulden abgestimmte zylindrische Paßflächen aufweisen und - im Längsschnitt gesehen - nach oben offen U-förmig ausgebildet sind und zur Achse senkrechte innere Anlageflächen aufweisen, deren axialer Abstand größer ist als die Breite des Lagerbocks in dem von der Brücke umfaßten Bereich,
- die Lagerschalen - im Längsschnitt gesehen - nach unten offen U-förmig ausgebildet sind und Seitenwandungen mit zur Achse im wesentlichen senkrechten inneren und äußeren Anlageflächen aufweisen, wobei der Abstand der äußeren Anlageflächen auf dem Abstand zwischen den Anlageflächen der Brücke und der Abstand der inneren Anlageflächen auf die Breite des Lagerbocks im umfaßten Bereich abgestimmt ist, und daß
- die Seitenwandungen in Richtung der Achse gesehen zur stufenlosen Anpassung an eine vorgegebene Montagebreite unterschiedlich dick ausgebildet sind.

Unter der Brücke wird eine Traverse mit zwei Schenkeln verstanden.

Mit der direkten Befestigung der vertikalen Montageflansche der Lagerböcke am Steg der I-Profile der Längsträger wird erreicht, dass im oberen Flansch der Profile keine Bohrungen mehr erforderlich sind und daß das Profil in diesem hochbeanspruchten Bereich nicht geschwächt wird. Es müssen also keine Längsträger vorgesehen werden, die im gelochten Bereich den Belastungen standhalten, im übrigen aber überdimensioniert und daher unnötig schwer sind.

Die Verwendung vertikaler Montageflansche schließt aber die Anordnung von Langlöchern zur stufenlosen Anpassung an unterschiedliche Rahmenbreiten aus. Die bekannten gestuften Anpassungen, beispielsweise mittels Bohrungspaaren in der Sattelplatte, können weiter verwendet werden. Die erforderliche feinstufige Anpassung wird erfindungsgemäß dadurch erreicht, dass die Brücken U-förmig mit axial beabstandeten Anlageflächen ausgebildet sind und dass im Längsschnitt gesehen U-förmige Lagerschalen verwendet werden, bei denen die axial begrenzenden Seitenwandungen unterschiedlich dick ausführbar sind. Für eine vorgegebene Montagebreite wird erforderlichenfalls die passende grobstufige Anpassung vorgenommen und es werden dann die Dicken der Seitenwandungen der Lagerschalen so bestimmt, dass die noch fehlende Feinanpassung erreicht wird.

Dabei kann man von Lagerschalen ausgehen, bei denen der axiale Abstand der äußeren Anlageflächen der Seitenwandungen auf den axialen Abstand der inneren Anlageflächen der Brücke abgestimmt sind und bei denen der axiale Abstand der inneren Anlageflächen der Seitenwandungen geringer ist als die Breite des Lagerbocks in dem von der Brücke und dem Lager umfassten Bereich. Durch spangebende Bearbeitung wird dann der axiale Abstand der inneren Anlageflächen auf das notwendige Maß vergrößert, indem entsprechend der Positionierungsvorgabe für die Lagerböcke entweder nur an den äußeren, nur an den inneren oder an beiden Seitenwandungen Material abgetragen wird. Dies ist nicht besonders aufwendig, denn es handelt sich pro Lagerschale nur um eine einzige Einspannung auf einer Drehbank, auf der der Materialabtrag insbesondere bei aus Kunststoff bestehenden Lagerschalen rasch und präzise vorgenommen werden kann. Außerdem ist eine derartige Bearbeitung aber auch nur bei der Anpassung an ein ausgefallenes Breitenmaß des Rahmens im Einzelfall erforderlich. Meist wird ein mehr oder weniger "genormtes" Breitenmaß des Rahmens vorliegen, bei dem nur Fertigungstoleranzen auszugleichen sind. Dann kann man von vorgefertigten Lagerschalen mit festgelegten Dicken der Seitenwandungen ausgehen und auf die Möglichkeit des um 180° gedrehten Einbaus zurückgreifen, mit dem jeweils drei verschiedene Montagebreiten realisiert werden können.

Mit wenigen Typen von Dickenunterschieden der Seitenwandungen kann so der gesamte Bereich zwischen zwei grobstufig einstellbaren Montagebreiten so feinstufig abgedeckt werden, daß die zuvor beschriebene individuelle Anpassung durch Materialabtrag nicht erforderlich ist.

Vorteilhafte Ausgestaltungen und Weiterbildungen des Erfindungsgedankens sind in den Unteransprüchen 2 bis 12 beschrieben. Weitere Einzelheiten werden anhand der in den Figurn 1 bis 11 dargestellten Ausführungsbeispielen näher erläutert. Es zeigen:
- Fig. 1: einen Teil einer erfindungsgemäßen Sattelkupplung im Längsschnitt,
- Fig. 2: einen Teil der Sattelkupplung gemäß Fig. 1 im Querschnitt,
- Fig. 3: das Detail einer Weiterbildung der Sattelkupplung gemäß Fig. 1 im Längsschnitt,
- Fig. 4 und 5: im Detail die Möglichkeit der grobstufigen Breitenanpassung mittels Paaren von Bohrungen in der Kupplungsplatte,
- Fig. 6 und 7: die Lagerschalen der Fig. 4 und 5 in um 180° gedrehter Einbaulage,
- Fig. 8 und 9: die Breitenanpassung im Bereich der Quertraversen,
- Fig. 10: die drei mit einem Lagerschalenpaar möglichen Ausführungen, und
- Fig. 11: einen erfindungsgemäßen Lagerbock in perspektivischer Darstellung.

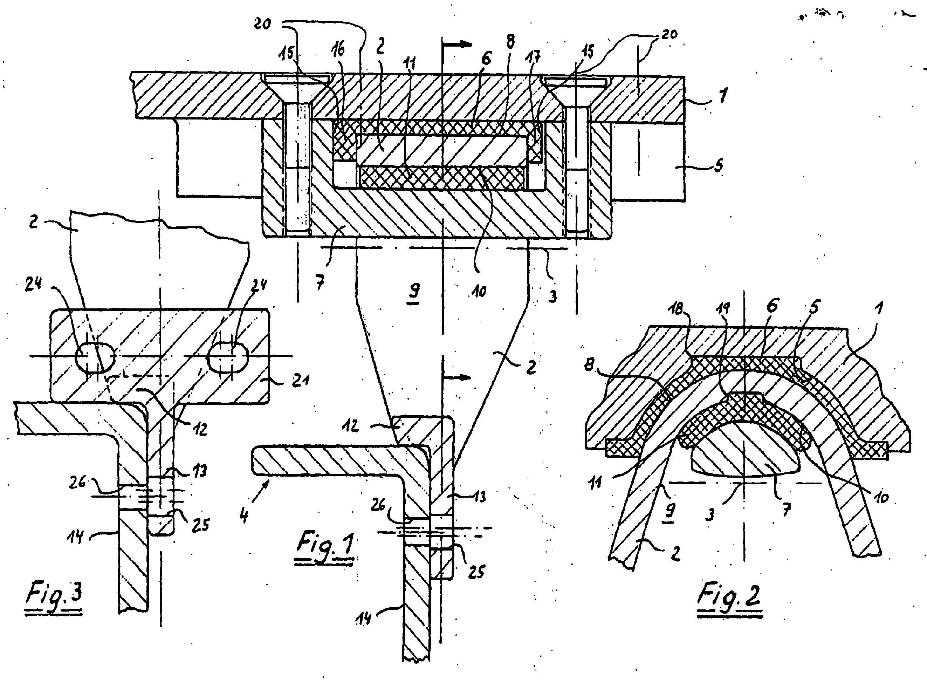

Die Darstellung in Fig. 1 entspricht einem Längsschnitt durch die Montagestelle in der Ebene der Achse 3, um die die Kupplungsplatte 1 relativ zum Lagerbock 2 schwenkbar ist. Mit 4 ist der in Fahrtrichtung gesehene rechte Teil des Rahmens bezeichnet, der aus einem Längsträger 14 mit I-Profil besteht. Im Längsträger 14 ist ebenso wie im vertikalen Montageflansch 13 des Lagerbocks 2 eine Reihe von Bohrungen 26, 25 vorgesehen, die zur Befestigung des Lagerbocks 2 an der äußeren Seitenwand des Längsträges 14 mittels Schrauben dienen. Der Lagerbock 2 ist außerdem mit einem kurzen horizontalen Montageflansch 12 ausgestattet, durch den die vertikale Positionierung des Lagerbocks 2 relativ zum Längsträger 14 festgelegt wird und über den die Lagerkräfte unmittelbar vom Lagerbock 2 auf den Längsträger 14 übertragen werden.

Die Lagerplatte 1 ist an ihrer Unterseite mit einer zur Achse 3 koaxialen hohlzylindrischen Lagermulde 5 ausgestattet, deren Querschnitt aus Fig. 2 ersichtlich ist. In die Lagermulde 5 ist eine Lagerschale 6 eingelegt, deren Seitenwandungen 16, 17 unterschiedlich dick ausgebildet sind. Die Seitenwandungen umgreifen den oberen Teil des Lagerbocks 2 und liegen ihrerseits an den Innenwandungen 15 der - im Längsschnitt gesehen - U-förmig ausgebildeten Brücke 7 an. Die Brücke 7 durchgreift das Auge 9 des Lagerbocks und ist mittels Schrauben an der Lagerplatte 1 befestigt. Zwischen der Brücke 7 und der Innenfläche 10 des Auges 9 ist ein Dämpfungselement 11 angeordnet. Durch Mittellinien 20 sind außer den in Fig. 1 zur Befestigung der Brücke 7 benutzten Bohrungen in der Lagerplatte 1 auch die Positionen eines axial versetzten Bohrungspaares angedeutet, das für eine grobstufige Positionierung der Lagerböcke 2 relativ zur Kupplungsplatte 1 vorgesehen sind.

Aus Fig. 2 sind die Querschnittsformen der Lagerschale 6 und des Dämpfungselementes 11 ersichtlich. Beide Bauteile sind durch Vorsprünge 18, 19 sowie entsprechende Ausnehmungen in der Lagermulde 5 der Lagerplatte 1 bzw. in der Innenwand 10 des Auges 9 gegen eine drehende Relativbewegung gesichert. Bei einer Schwenkbewegung der Lagerplatte 1 relativ zum Lagerbock 2 um die Achse 3 findet eine gleitende Relativbewegung zwischen der Lagerfläche 8 des Lagerbocks 2 einerseits und zwischen dem Dämpfungselement 11 und der Oberfläche der Brücke 7 statt.

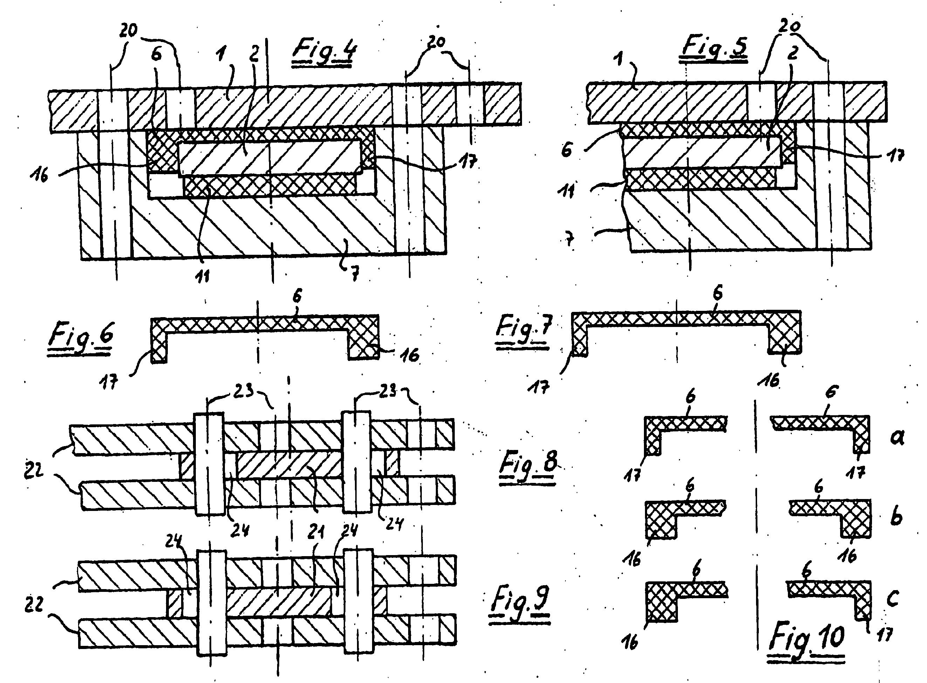

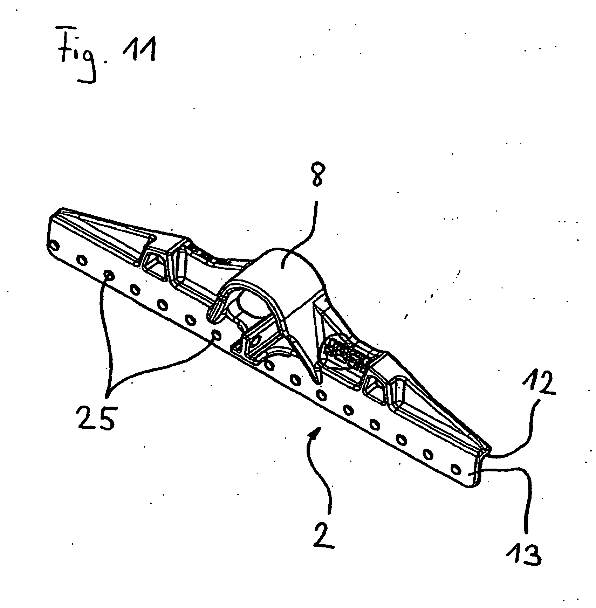

Die in Fig. 3 ausschnittsweise dargestelle Modifikation des Lagerbocks gemäß Fig. 1 zeigt einen sich parallel zur Achse 3 erstreckenden Anschlag 21 im Schnitt, der zur Befestigung einer Quertraverse (vgl. Fig. 8 und 9) dient und der mit Langlöchern 24 ausgestattet ist. Auf diese Weise kann zwischen den beiden Lagerböcken einer Sattelkupplung noch eine Quertraverse 22 (siehe Fig. 8 und 9) angebracht werden, falls die Steifigkeit des Rahmens 4 nach Wegfall der früher üblichen Montageplatte im Befestigungsbereich der Lagerböcke 2 als nicht ausreichend angesehen wird. Die Befestigung des Lagerbocks 2 am Längsträger 14 des Rahmens 4 und die Bezugsziffern 12, 13, 25 und 26 in Fig. 3 entsprechen denen in Fig. 1 und müssen nicht nochmals erläutert werden.

Die Fig. 4 und 5 sind Ausschnitte aus Fig. 1 und zeigen die alternative Benutzung der Bohrungen 20. In Fig. 4 ist die Brücke 7 dem innenliegenden Bohrungspaar zugeordnet, während in Fig. 5 die Brücke 7 demgegenüber um den Bohrungsabstand nach außen versetzt angeordnet ist. Auf diese Weise kann, wie gesagt, eine grobstufige Breitenpositionierung der Lagerböcke 2 relativ zur Kupplungsplatte 1 und damit eine erste Annäherung an eine vorgegebene Montagebreite des Rahmens 4 der Zugmaschine vorgenommen werden.

Die Fig. 6 und 7 zeigen in vereinfachter Darstellung, um welchen Betrag sich die Mittellinien des Lagerbocks 2 gegenüber den Fig. 4 und 5 verschieben würden, wenn die Lagerschale 6 in den Fig. 4 und 5 um 180° gedreht eingesetzt würden. Es versteht sich von selbst, daß der Abstand der Bohrungen 20 und der durch Dickenunterschiede der Seitenwandungen 16 und 17 mögliche Feinabstufungsbereich derart aufeinander abzustimmen sind, daß ein vorgegebener Variationsbereich vollständig überdeckt wird.

Das gleiche Prinzip der Breitenanpassung wird auch bei den ggf. vorgesehenen Quertraversen 22 angewandt. Die einstückig mit den Lagerböcken 2 ausgebildeten Anschläge 21 sind mit Langlöchern 24 ausgestattet, während die Quertraversen 22 in Längsrichtung versetzte Bohrungspaare 23 aufweisen, die wahlweise benutzt werden können. In Fig. 8 und 9 sind jeweils die innenliegenden Bohrungspaare benutzt, wobei in Fig. 8 der äußerst linke Bereich des Langlochs 24 und in Fig. 9 der äußerst rechte Bereich des Langlochs 24 benutzt wird. Auch hier sind die Abstände der Bohrungen 23 und die Länge der Langlöcher 24 selbstverständlich so aufeinander abgestimmt, daß der gesamte Variationsbereich überdeckt wird.

In Fig. 10 sind schematisch die drei Möglichkeiten dargestellt, die mit einem Paar Lagerschalen mit bestimmten Dickenunterschieden der Seitenwandungen 16 und 17 möglich sind. In Fig. 10a liegen die beiden dünnen Seitenwandungen 17 außen, d.h. die Lagerböcke 2 haben den größtmöglichen Abstand voneinander. In Fig. 10b liegen beide Dickenseitenwandungen 16 außen, was bedeutet, daß die Lagerböcke 2 den kleinstmöglichen axialen Abstand haben. In Fig. 10c schließlich ist links die dicke Seitenwandung außen angeordnet, während rechts die dünne Seitenwandung außen angeordnet ist. In diesem Fall liegt der axiale Abstand zwischen den beiden Lagerböcken 2 genau zwischen dem gemäß Fig. 10a und dem gemäß Fig. 10b. Die letztgenannte Variante führt zwar zu einer leicht asymmetrischen Anordnung der Sattelkupplung auf der Zugmaschine, was jedoch ohne weiteres tolerierbar ist, weil die Asymmetrie maximal im Bereich von 1 oder 2 mm liegt und daher - verglichen mit den Maßtoleranzen, die bei Zugmaschinen und Auflieger insgesamt auftreten - zu vernachlässigen ist.

Fig. 11 zeigt eine perspektivische Darstellung eines Lagerbocks gemäß der Erfindung in Ergänzung zu den auszugsweisen Schnittdarstellungen der Fig. 1 bis 10. Die Bezugsziffern haben die gleiche Bedeutung wie in den bereits beschriebenen Figuren und werden hier nicht nochmals erläutert.

## Patentansprüche

1. Sattelkupplung für die lösbare Verbindung zwischen einem Auflieger und einer Zugmaschine mit einer Kupplungsplatte (1) und einem Paar Lagerböcken (2) zur Befestigung der Sattelkupplung am Rahmen (4) der Zugmaschine, wobei
- die Kupplungsplatte (1) um eine zur Aufstandsfläche der Zugmaschine parallele und sich quer zur Längsachse der Zugmaschine erstreckende Achse (3) schwenkbar mit den Lagerböcken (2) verbunden ist,
- die Kupplungsplatte (1) an der Unterseite ein Paar zur Achse (3) koaxiale; hohlzylindrische Lagermulden (5) aufweist und an den Lagerböcken (2) dazu korrespondierende, zylindrische Lagerflächen (8) ausgebildet sind,
die Lagerböcke (2) unterhalb der Lagerflächen (8) ein Auge (9) für den Durchgriff eines Befestigungsmittels in Form einer Brücke (7) aufweisen, mit dem die Kupplungsplatte (1) um die Achse (3) schwenkbar mit den Lagerböcken (2) verbunden ist, und wobei
- zwischen der Lagermulde (5) und der Lagerfläche (8) eine Lagerschale (6) sowie zwischen der Brücke (7) und der oberen Innenwandung des Auges (9) ein Dämpfungselement (11) angeordnet ist,
**dadurch gekennzeichnet, daß**
- die Lagerböcke (2) einstückig aus einem Gußteil bestehen und einen vertikalen Montageflansch (13) für die direkte seitliche Befestigung an den Längsträgern (14) des Rahmens (4) der Zugmaschine aufweisen,
- die Brücken (7) auf die hohlzylindrischen Lagermulden (5) abgestimmte zylindrische Paßflächen aufweisen und - im Längsschnitt gesehen - nach oben offen U-förmig ausgebildet sind und zur Achse (3) im wesentlichen senkrechte innere Anlageflächen (15) aufweisen, deren axialer Abstand größer ist als die Breite des Lagerbocks (12) in dem von der Brücke (7) umfaßten Bereich,
- die Lagerschalen (6) - im Längsschnitt gesehen - nach unten offen U-förmig ausgebildet sind und Seitenwandungen (16, 17) mit zur Achse (3) senkrechten inneren und äußeren Anlageflächen aufweisen, wobei der Abstand der äußeren Anlageflächen auf dem Abstand zwischen den Anlageflächen (15) der Brücke (7) und der Abstand der inneren Anlageflächen auf die Breite des Lagerbocks (2) im umfaßten Bereich abgestimmt ist; und daß
- die Seitenwandungen (16, 17) in Richtung der Achse (3) gesehen zur stufenlosen Anpassung an eine vorgegebene Montagebreite unterschiedlich dick ausgebildet sind.

2. Sattelkupplung nach Anspruch 1, **dadurch gekennzeichnet, daß** die Lagerschalen (6) aus einem geeigneten Kunststoff bestehen.

3. Sattelkupplung nach Anspruch 1 oder 2, **dadurch gekennzeichnet, daß** die Lagerschalen (6) auch um 180° gedreht einbaubar sind, so daß bei Seitenwandungen (16, 17) mit gegebenem Dickenunterschied eine dreistufige Anpasung an die Montagebreite möglich ist.

4. Sattelkupplung nach einem der Ansprüche 1 bis 3, **dadurch gekennzeichnet, daß** Paare von Lagerschalen (6) mit verschiedenen Dickenunterschieden der Seitenwandungen (16, 17) verwendet werden.

5. Sattelkupplung nach einem der Ansprüche 1 bis 4, **dadurch gekennzeichnet, daß** die Brücken (7) mittels Bolzen an der Kupplungsplatte (1) befestigt sind und daß in der Kupplungsplatte (1) in an sich bekannter Weise zwei Bohrungspaare (20) für eine grobstufige Breitenanpassung vorgesehen sind:

6. Sattelkupplung nach einem der Ansprüche 1 bis 5, **dadurch gekennzeichnet, daß** an den Lagerböcken (2) je ein sich parallel zur Schwenkachse (3) durch die Augen (9) erstreckender, einstückig angeformter Anschlag (21) für die Befestigung einer Quertraverse (22) vorgesehen ist.

7. Sattelkupplung nach Anspruch 6, **dadurch gekennzeichnet, daß** die Quertraverse (22) Bohrungspaare (23) aufweist, deren Abstände zu den Bohrungspaaren (20) in der Kupplungsplatte (1) korrespondieren und daß in den Anschlägen (21) Langlöcher (24) vorgesehen sind, die den durch die unterschiedlichen Dicken der Seitenwände (16, 17) der Lagerschalen (6) ermöglichten Toleranzbereich überdecken.

8. Sattelkupplung nach einem der Ansprüche 1 bis 7, **dadurch gekennzeichnet, dass** in den Montageflanschen (13) der Lagerböcke (2) und in den Längsträgern (14) der Zugmaschine eine Reihe von äquidistanten Bohrungen (25) vorgesehen sind, die in bekannter Weise eine grobstufige Änderung der Längsanordnung der Sattelkupplung auf dem Rahmen (4) der Zugmaschine ermöglichen.

9. Sattelkupplung nach Anspruch 8, **dadurch gekennzeichnet, daß** die Reihe der Bohrungen (25) im Lagerbock (2) symmetrisch zur Schwenkachse (3) angeordnet ist, so daß die Lagerböcke (2) zur Anpassung an eine gegebene Montagebreite wahlweise rechts und links verwendbar sind und für ihre Herstellung nur eine Gußform erforderlich ist.

10. Sattelkupplung nach Anspruch 8, **dadurch gekennzeichnet, daß** die Reihe der Bohrungen (25) im Lagerbock asymmetrisch zur Schwenkachse (3) angeordnet ist, so daß mit gesondert hergestellten Rechts-Links-Lagerböcken (2) durch einen Rechts-links-Tausch neben der Anpassung an eine vorgegebene Montagebreite zusätzlich eine feinstufige Anpassung für die Längsanordnung möglich ist.

11. Sattelkupplung nach einem der Ansprüche 1 bis 10, **dadurch gekennzeichnet, daß** die Lagerböcke (2) zusätzlich einen einstückig angeformten horizontalen Auflageflansch (12) aufweisen.

12. Sattelkupplung nach einem der Ansprüche 1 bis 11, **dadurch gekennzeichnet, daß** die Lagerschalen (6) und die Dämpfungselemente (11) sich in Längsrichtung der Achse (3) erstreckende Vorsprünge (18, 19) und die gegenüberliegenden Wände der Kupplungsplatte (1) und des Auges (9) des Lagerbocks (2) korrespondierende Ausnehmungen zur formschlüssigen Drehsicherung der Lagerschalen (6) bzw. Dämpfungselement (11) aufweisen.

## Claims

1. Fifth-wheel coupling for the releasable connection between a semitrailer and a tractor with a coupling plate (1) and a pair of bearing supports (2) for the attachment of the fifth-wheel coupling to the frame (4) of the tractor, wherein
- the coupling plate (1) is connected to the bearing supports (2) so as to be turnable about an axis (3) parallel to the road-contact area of the tractor and extending transversely to the longitudinal axis of the tractor,
- the coupling plate (1) at its underside has a pair of hollow cylindrical bearing recesses (5) coaxial with the axis (3), and on the bearing supports (2) are formed, cylindrical bearing surfaces (8) corresponding to them,
- the bearing supports (2) have beneath the bearing surfaces (8) an eye (9) for the through extension of an attaching means in the form of a bridge (7), by which the coupling plate (1) is connected to the bearing supports (2) so as to be turnable about the axis (3), and wherein
- a bearing shell (6) is provided between the bearing recess (5) and the bearing surface (8) and a damping element is provided between the bridge and the upper inner wall of the eye (9),
**characterised in that**
- the bearing supports (2) integrally comprise a cast part and have a vertical mounting flange (13) for direct lateral attachment to the longitudinal bearers (14) of the frame (4) of the tractor,
- the bridges (7) have cylindrical seating surfaces suited to the hollow cylindrical bearing recesses (5) and - seen in longitudinal section - are formed in an upwardly open U-shape and substantially perpendicularly to the axis (3) have inner contact surfaces (15), the axial spacing of which is greater than the width of the bearing support (12) in the region encompassed by the bridge (7),
- the bearing shells (6) - seen in longitudinal section - are formed in a downwardly open U-shape and have side walls (16, 17) with inner and outer contact surfaces perpendicular to the axis (3), wherein the spacing of the outer contact surfaces is suited to the spacing between the contact surfaces (15) of the bridge (7) and the spacing of the inner contact surfaces is suited to the width of the bearing support (2) in the encompassed region, and that
- the side walls (16, 17) seen in the direction of the axis (3) are formed of differing thickness for finely stepped adjustment to a given mounting width.

2. Fifth-wheel coupling according to claim 1, **characterised in that** the bearing shells (6) comprise a suitable plastics.

3. Fifth-wheel coupling according to claim 1 or 2, **characterised in that** the bearing shells (6) can also be installed turned through 180°, so that in the case of side walls (16, 17) with a given thickness difference a three-step adjustment to the mounting width is possible.

4. Fifth-wheel coupling according to one of claims 1 to 3, **characterised in that** pairs of bearing shells (6) are used with differing thickness differences of the side walls (16, 17).

5. Fifth-wheel coupling according to one of claims 1 to 4, **characterised in that** the bridges (7) are fixed to the coupling plate (1) by means of bolts and that in the coupling plate (1) in a manner known per se are provided two pairs of bores (20) for a coarsely stepped width adjustment.

6. Fifth-wheel coupling according to one of claims 1 to 5, **characterised in that** on each of the bearing supports (2) is provided, extending parallelly to the swing axis (3) through the eyes (9), an integrally formed lug (21) for the attachment of a cross member (22).

7. Fifth-wheel coupling according to claim 6, **characterised in that** the cross member (22) has pairs of bores (23), the spacings of which correspond to the pairs of bores (20) in the coupling plate (1) and that in the lugs (21) are provided slots (24), which cover the tolerance range made possible by the differing thicknesses of the side walls (16, 17) of the bearing shells (6).

8. Fifth-wheel coupling according to one of claims 1 to 7, **characterised in that** in the mounting flanges (13) of the bearing supports (2) and in the longitudinal bearers (14) of the tractor are provided a row of equidistant bores (25) which in a known way make possible a coarsely stepped change of the longitudinal disposition of the fifth-wheel coupling on the frame (4) of the tractor.

9. Fifth-wheel coupling according to claim 8, **characterised in that** the row of bores (25) in the bearing support (2) is arranged symmetrically to the swing axis (3), so that the bearing supports (2) for the adjustment to a given mounting width can be used optionally on the right and left and only one casting mould is required for their manufacture.

10. Fifth-wheel coupling according to claim 8, **characterised in that** the row of bores (25) in the bearing support is arranged asymmetrically to the swing axis (3), so that with specially manufactured right-left bearing supports (2) through a right-left exchange, besides the adjustment to a given mounting width a finely stepped adjustment for the longitudinal disposition is also possible.

11. Fifth-wheel coupling according to one of claims 1 to 10, **characterised in that** the bearing supports (2) additionally have an integrally formed horizontal bearing flange (12).

12. Fifth-wheel coupling according to one of claims 1 to 11, **characterised in that** the bearing shells (6) and the damping elements (11) have projections (18, 19) extending in the longitudinal direction of the axis (3), and the opposing walls of the coupling plate (1) and of the eye (9) of the bearing support (2) have corresponding recesses for the positive rotational securing of the bearing shells (6) and damping elements (11) respectively.

## Revendications

1. Sellette d'attelage pour le raccordement amovible entre un semi-remorque et un véhicule tracteur avec une plaque d'attelage (1) et une paire de supports de paliers (2) pour la fixation de la sellette d'attelage au châssis (4) du véhicule tracteur, dans laquelle
- la plaque d'attelage (1) est raccordée aux supports de paliers (2) de manière pivotante autour d'un axe (3) parallèle à la surface de contact au sol du véhicule tracteur et s'étendant perpendiculairement à l'axe longitudinal du véhicule tracteur,
- la plaque d'attelage (1) comporte sur sa face inférieure une paire de cavités de paliers (5) en forme de cylindres creux coaxiaux à l'axe (3) et des surfaces d'appui (8) cylindriques correspondantes à celles-ci sont formées dans les supports de paliers (2),
- les supports de paliers (2) comportent sous les surfaces d'appui (8) un oeillet (9) pour l'engrènement d'un moyen de fixation sous forme d'un pont (7) avec lequel la plaque d'attelage (1) est raccordée aux supports de paliers (2) de manière pivotante autour d'un axe (3) et dans laquelle
- une enveloppe de palier (6) est agencée entre les cavités de paliers (5) et la surface d'appui (8) et un élément amortisseur (11) est agencé entre le pont (7) et la paroi intérieure supérieure de l'oeillet (9),
**caractérisée en ce que**
- les supports de paliers (2) sont constitués d'une pièce moulée monobloc et comprennent une bride de montage verticale (13) pour la fixation latérale directe aux montants longitudinaux (14) du châssis (4) du véhicule tracteur,
- les ponts (7) comprennent des surfaces d'ajustage cylindriques adaptées aux cavités de paliers creuses (5) et - vus en coupe longitudinale - sont configurés ouverts vers le haut en forme U et comprennent des surfaces de contact (15) intérieures sensiblement perpendiculaires à l'axe (3) dont l'espacement axial est supérieur à la largeur du support de paliers (12) dans la zone entourée par le pont (7),
- les enveloppes de paliers (6) - vues en coupe longitudinale - sont configurées ouvertes vers le bas en forme U et comprennent des parois latérales (16, 17) avec des surfaces de contact intérieures et extérieures perpendiculaires à l'axe (3), l'écart entre les surfaces de contact extérieures étant adapté à l'écart entre les surfaces de contact (15) du pont (7) et l'écart entre les surfaces de contact intérieures étant adapté à la largeur du support de palier (2) dans la zone entourée, et **en ce que**
- les parois latérales (16, 17), vues dans le sens de l'axe (3), sont configurées avec une épaisseur différente pour une adaptation fine à une largeur de montage prédéterminée.

2. Sellette d'attelage selon la revendication 1, **caractérisée en ce que** les enveloppes de paliers (6) sont constituées d'une matière plastique appropriée.

3. Sellette d'attelage selon la revendication 1 ou 2, **caractérisée en ce que** les enveloppes de paliers (6) peuvent être montées également tournées de 180°, de sorte qu'une adaptation à trois gradations à la largeur de montage est possible dans le cas de parois latérales (16, 17) ayant une différence d'épaisseur donnée.

4. Sellette d'attelage selon l'une quelconque des revendications 1 à 3, **caractérisée en ce que** des paires d'enveloppes de paliers (6) sont utilisées avec des parois latérales (16, 17) ayant des épaisseurs différentes.

5. Sellette d'attelage selon l'une quelconque des revendications 1 à 4, **caractérisée en ce que** les ponts (7) sont fixés à la plaque d'attelage (1) à l'aide de boulon et **en ce que** deux paires d'alésages (20) sont prévues dans la plaque d'attelage (1) de manière connue en soi pour une adaptation grossière en largeur.

6. Sellette d'attelage selon l'une quelconque des revendications 1 à 5, **caractérisée en ce qu'**une butée (21) moulée monobloc, s'étendant parallèlement à l'axe de pivotement (3) à travers les oeillets (9) est prévue sur chaque support de palier (2) pour la fixation d'une barre transversale (22).

7. Sellette d'attelage selon la revendication 6, **caractérisée en ce que** la barre transversale (22) comprend des paires d'alésages (23) dont les écarts correspondent aux paires d'alésages (20) dans la plaque d'attelage (1) et **en ce que** des trous oblongs (24), qui recouvrent la zone de tolérance assurée par les épaisseurs différentes des parois latérales (16, 17) des enveloppes de paliers (6), sont prévus dans les butées (21).

8. Sellette d'attelage selon l'une quelconque des revendications 1 à 7, **caractérisée en ce qu'**une série d'alésages équidistants (25), qui permettent, de manière connue, une modification grossière de l'agencement longitudinal de la sellette d'attelage par rapport au châssis (4) du véhicule tracteur, est prévue dans la bride de montage (13) des supports de paliers (2) et dans les montants longitudinaux (14) du véhicule tracteur.

9. Sellette d'attelage selon la revendication 8, **caractérisée en ce que** la série d'alésages (25) dans le support de palier (2) est placée symétriquement à l'axe de pivotement (3), de sorte que les supports de paliers (2) peuvent être utilisés au choix à droite et à gauche pour l'adaptation à une largeur de montage donnée et qu'un seul moule est nécessaire pour leur fabrication.

10. Sellette d'attelage selon la revendication 8, **caractérisée en ce que** la série d'alésages (25) dans le support de palier est placée a-symétriquement à l'axe de pivotement (3), de sorte que, à l'aide de supports de paliers (2) droits-gauches fabriqués séparément, une adaptation fine est possible pour l'agencement longitudinal, en plus de l'adaptation à une largeur de montage prédéterminée, grâce à un échange droit-gauche.

11. Sellette d'attelage selon l'une quelconque des revendications 1 à 10, **caractérisée en ce que** les supports de paliers (2) comprennent, en plus, une bride d'appui (12) horizontale moulée monobloc.

12. Sellette d'attelage selon l'une quelconque des revendications 1 à 11, **caractérisée en ce que** les enveloppes de paliers (6) et les éléments amortisseurs (11) comprennent des parties en saillie (18, 19) s'étendant dans le sens longitudinal de l'axe (3) et les parois opposées de la plaque d'attelage (1) et de l'oeillet (9) du support de palier (2) comprennent des évidements correspondants pour le dispositif de sécurité anti-torsion solidaire des enveloppes de paliers (6) et/ou des éléments amortisseurs (11).
